# EUROPEAN PATENT APPLICATION

(11) **EP 4 333 414 A1**
(43) Date of publication of application: **06.03.2024**
(21) Application number: 23195326.6
(22) Date of filing: 05.09.2023
(51) Int. Cl.: H04M 3/56

(54) **CONFERENCE SYSTEM, SERVER, AUDIO OUTPUT METHOD, AND USER TERMINAL**

(30) Priority: 05.09.2022 JP 2022140810
(71) Applicant: Panasonic Intellectual Property Management Co., Ltd., Osaka 571-0057 (JP)
(72) Inventor: TAKAHASHI, Takeshi, Osaka, 571-0057 (JP); KOMATSU, Katsumi, Osaka, 571-0057 (JP)
(74) Representative: Eisenführ Speiser

(57) **Abstract**

A conference system in which a server and a plurality of user terminals are communicably connected is provided. The server has a function of setting permission and prohibition of output of speech voice signals of one or more other users for each user who is a user of each of the user terminals. When a specific user among a plurality of users participating in a conference speaks, the server, based on the setting, transmits the speech voice signals to user terminals of permitted users who are permitted to output the speech voice signals with respect to the specific user, and omits transmission of the speech voice signals of user terminals of prohibited users who are prohibited from outputting the speech voice signals with respect to the specific user.

## Description

### TECHNICAL FIELD

The present disclosure relates to a conference system, a server, an audio output method, and a user terminal.

### BACKGROUND ART

With the recent epidemic or spread of the novel coronavirus disease or the like, telework (so-called telecommuting) has become more prevalent than ever before in offices. Although it is considered that such an infectious disease will converge sooner or later, in industries or businesses which depend on telework or are found to be able to deal with work by telework, the working pattern does not completely return to a working pattern of office work in principle as before the outbreak of the novel coronavirus disease or the like, and a working pattern that takes the best of both office work and telecommuting is conceivable, for example.

For example, Patent Literature 1 discloses a communication system that smoothly performs communication between a person who works at a workplace and a telecommuter, relieves loneliness of the telecommuter, and improves work efficiency. The communication system includes a plurality of terminals arranged at multiple points, and a communication device that controls communication between the terminals via a network and executes an audio conference. The communication apparatus includes a conference room processing unit that constructs a shared conference room normally used by each terminal and one or two or more individual conference rooms individually used by a specific group of each terminal and provides an audio conference for each conference room to which each terminal belongs.

### CITATION LIST

### PATENT LITERATURE

Patent Literature 1: JP2020-141208A

### SUMMARY OF INVENTION

In a case where convergence of the above novel coronavirus disease or the like is expected, a person working in an office and a person working at home may be mixed. Therefore, even in a conference held in an office, a commuting participant and a telecommuting participant are mixed. In this case, when the commuting participant uses a speakerphone with a microphone for a remote conference (hereinafter, abbreviated as a "speakerphone"), the telecommuting participant feels alienated in the conference. Specifically, there are problems that (1) it is hardly known what a person other than the commuting participant who is speaking near the microphone of the speaker phone is speaking, (2) if the discussion of the conversation progresses only with the commuting participant, the telecommuting participant cannot keep up with the discussion, and (3) an entire atmosphere in the conference room can be known by turning on a camera, but not all commuting participants individually turn on the camera, and thus it is difficult to know an atmosphere such as facial expressions of all participants of the conference.

In order to solve the above problems (1) to (3), the following measures are conceivable. For example, as a first measure, it is conceivable to arrange a plurality of connected speakerphones in a conference room. Accordingly, it is possible to collect voices from all directions widely in a conference room, and it is expected to pick up utterances of a plurality of commuting participants in the conference room. However, with the first measure, it is necessary to prepare a plurality of dedicated devices (that is, speakerphones), and an increase in cost is unavoidable.

In addition, as a second measure, it is conceivable that all participants including a commuting participant and a telecommuting participant wear headsets or the like and participate in a conference in mind of participating from their own seats without using a conference room in a company. Accordingly, the above problems (1) to (3) can be solved. However, in a case where the second measure is used, a new problem occurs. That is, in a case where a plurality of commuting participants participating in the same conference are physically close to each other, when one of the commuting participants speaks, both a direct voice of the speech and an audio of the speech subjected to speech processing by a conference system are heard, making it difficult to hear the speech of the same person. In other words, since a voice of the same person is heard again with a delay due to the speech processing after the direct voice, there is a sense of incongruity, and even if another participant utters, it is difficult to hear the utterance because of the delayed voice.

The present disclosure has been devised in view of the above circumstances. An object of the present disclosure is to provide a conference system, a server, an audio output method, and a user terminal for preventing an omission in listening to speech content of a listener and supporting smooth progress of a conference or the like in which a commuting participant and a telecommuting participant are mixed.

The present disclosure provides a conference system in which a server and a plurality of user terminals are communicably connected. The server has a function of setting permission and prohibition of output of speech voice signals of one or more other users for each user who is a user of each of the user terminals. When a specific user among a plurality of users participating in a conference speaks, the server, based on the setting, transmits the speech voice signals to user terminals of permitted users who are permitted to output the speech voice signals with respect to the specific user, and omits transmission of the speech voice signals of user terminals of prohibited users who are prohibited from outputting the speech voice signals with respect to the specific user.

Further, the present disclosure provides a server communicably connected to a plurality of user terminals. The server includes a memory configured to store information defining permission and prohibition of output of speech voice signals of one or more other users for each user who is a user of each of the user terminals; a processor configured to, when a specific user among the plurality of users participating in a conference speaks, determine user terminals of permitted users who are permitted to output the speech voice signals with respect to the specific user, and determine to omit transmission of the speech voice signals to user terminals of prohibited users who are prohibited from outputting the speech voice signals with respect to the specific user, based on the information; and a communication unit configured to transmit the speech voice signals to the user terminals of the permitted users.

Further, the present disclosure provides an audio output method in a conference system in which a server and a plurality of user terminals are communicably connected. the audio output method includes storing information defining permission and prohibition of output of speech voice signals of one or more other users for each user who is a user of each of the user terminals, and when a specific user among a plurality of users participating in a conference speaks, transmitting the speech voice signals to user terminals of permitted users who are permitted to output the speech voice signals with respect to the specific user, and omitting transmission of the speech voice signals of user terminals of prohibited users who are prohibited from outputting the speech voice signals with respect to the specific user, based on the information.

Further, the present disclosure provides a user terminal among a plurality of user terminals communicably connected to a server. The user terminal includes an operation unit configured to accept an input operation; a display unit configured to display a setting screen for generating information defining permission and prohibition of output of speech voice signals of one or more other users for each user who is a user of each of the user terminals; and a processor configured to perform a setting change to switch one of the permission and prohibition of the output of the speech voice signals of the users to the other based on the input operation on the setting screen.

According to the present disclosure, in a conference or the like in which a commuting participant and a telecommuting participant are mixed, it is possible to prevent an omission of a listener in listening to speech content and support smooth progress of the conference or the like.

### BRIEF DESCRIPTION OF DRAWINGS

Fig. 1 shows a system configuration example of a conference system;
Fig. 2 is a block diagram showing a hardware configuration example of a conference system server;
Fig. 3 is a block diagram showing a hardware configuration example of a laptop PC/tablet terminal;
Fig. 4 schematically shows an operation overview example of the conference system;
Fig. 5 shows an example of a setting screen displayed on a display/operation unit of the laptop PC/tablet terminal;
Fig. 6 shows an example of an audio output setting table;
Fig. 7 is a flowchart showing an example of an overall operation procedure of the conference system server;
Fig. 8 is a flowchart showing an example of a detailed operation procedure of step St4 of Fig. 7;
Fig. 9 is a flowchart showing an example of a detailed operation procedure of step St12 of Fig. 8; and
Fig. 10 is a sequence diagram showing an example of an operation procedure between the conference system server and a conference application processing unit of the laptop PC/tablet terminal in time series.

### DESCRIPTION OF EMBODIMENTS

Hereinafter, embodiments specifically disclosing a conference system, a server, an audio output method, and a user terminal according to the present disclosure will be described in detail with reference to the drawings as appropriate. However, unnecessarily detailed description may be omitted. For example, detailed description of well-known matters and redundant description of substantially the same configuration may be omitted. This is to avoid unnecessary redundancy of the following description and to facilitate understanding of those skilled in the art. It should be noted that the accompanying drawings and the following description are provided for those skilled in the art to fully understand the present disclosure, and are not intended to limit the subject matter described in the claims.

A conference system according to the present embodiment timely distributes video and audio data signals at the time of utterance of a participant to a communication device (for example, a laptop PC or a tablet terminal) used by each participant in a remote web conference held by any one of a plurality of participants (for example, employees) as a host and attended by all the participants including the host, as an example of a use case thereof. The use case of the conference system according to the present embodiment may be not limited to the remote web conference described above. In order to make the following description easy to understand, the participants mentioned here include a person working in the office and a person working at home. However, all the participants may be persons working in the office or persons working at home. In the following description, the "participant of the remote web conference" may be referred to as a "user".

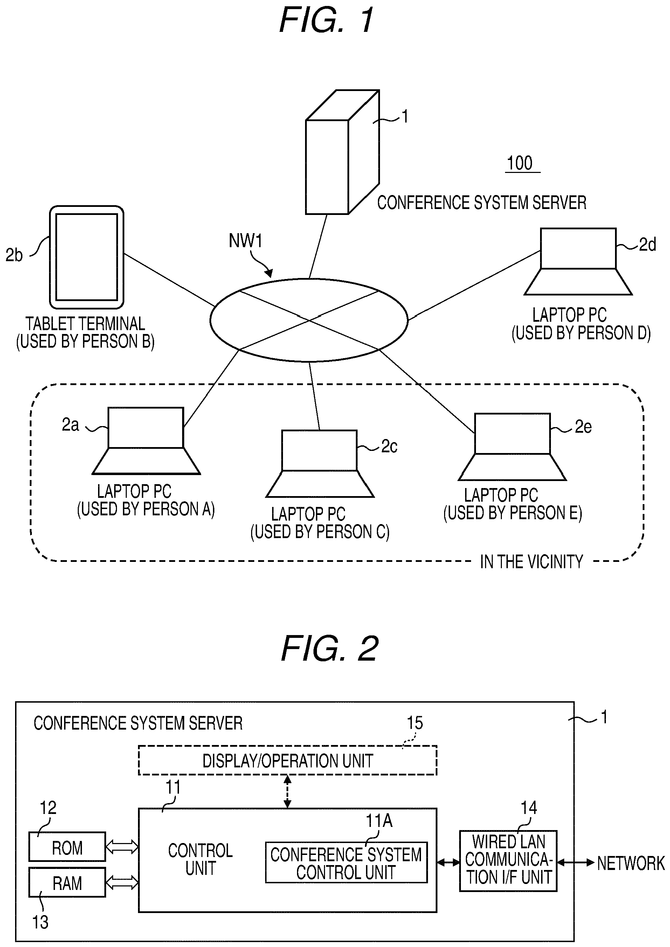

First, a system configuration of a conference system will be described with reference to Fig. 1. Fig. 1 shows a system configuration example of a conference system 100. The conference system 100 includes a conference system server 1, laptop PCs 2a, 2c, 2d, and 2e, and a tablet terminal 2b. The conference system server 1, the laptop PCs 2a, 2c, 2d, and 2e, and the tablet terminal 2b are connected to each other via a network NW1 for communication of data signals.

The network NW1 is a wired network, a wireless network, or a combination of a wired network and a wireless network. The wired network corresponds to, for example, at least one of a wired LAN (Local Area Network), a wired WAN (Wide Area Network), and power line communication (PLC), and may have another network configuration capable of wired communication. On the other hand, the wireless network corresponds to at least one of a wireless LAN such as Wi-Fi (registered trademark), a wireless WAN, short-range wireless communication such as Bluetooth (registered trademark), and a mobile communication network such as 4G or 5G, and may have another network configuration capable of wireless communication.

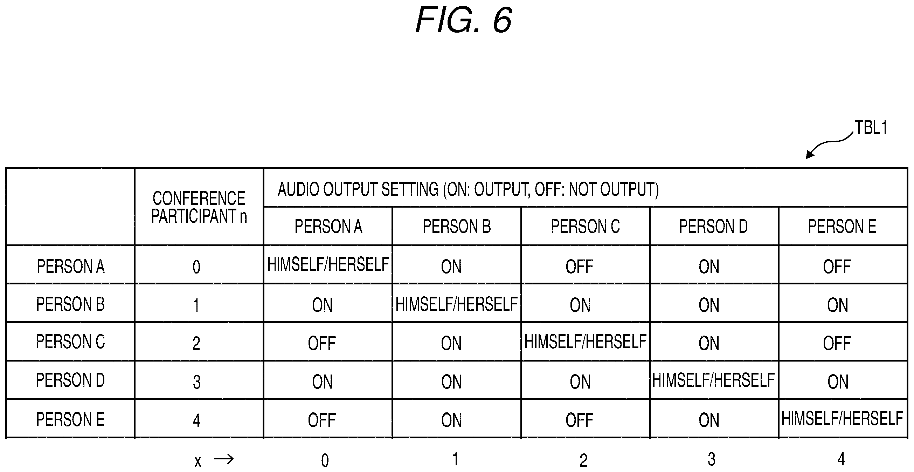

The conference system server 1 is an example of a server, receives video and audio data signals from communication devices (laptop PCs 2a, 2c, 2d, and 2e, and the tablet terminal 2b) used by the participants in the remote web conference, and distributes the video and audio data signals to the corresponding communication devices (laptop PCs 2a, 2c, 2d, and 2e, and the tablet terminal 2b). For each participant (a user), the conference system server 1 stores and manages an audio output setting table TBL1 (see Fig. 6) that defines permission and prohibition of output (in other words, distribution to communication devices used by one or more other participants) of data signals (speech voice signals) of speech voices of one or more other participants. When any one specific participant (an example of a specific user) speaks during the remote web conference, the conference system server 1 determines whether to distribute a data signal of a speech voice of the specific participant based on the audio output setting table TBL1. A hardware configuration example of the conference system server 1 will be described later in detail with reference to Fig. 2.

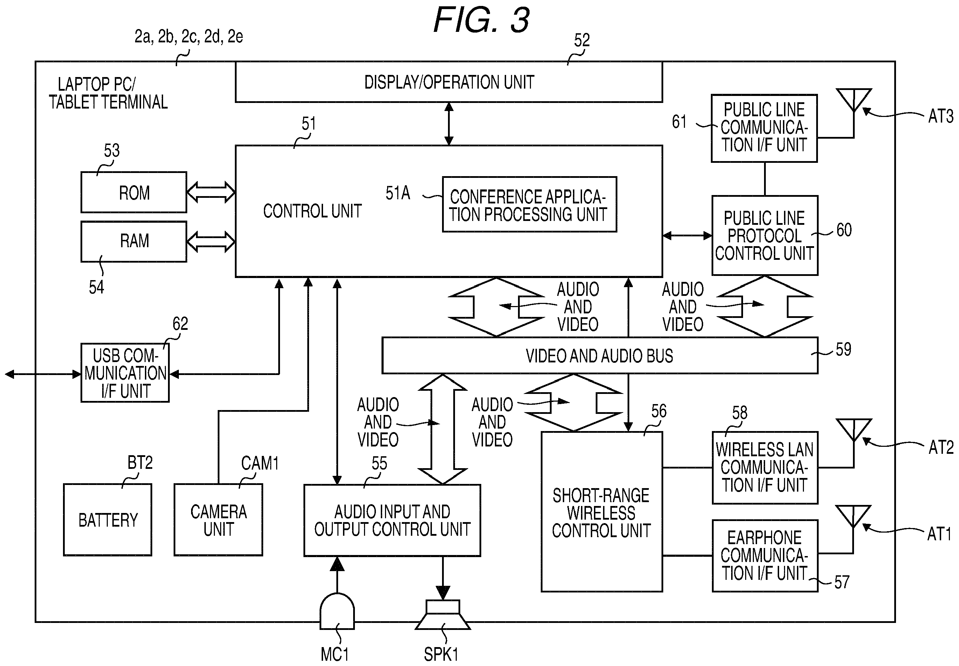

The laptop PC 2a is an example of the user terminal, and is a communication device used by a person A (for example, an employee) participating in the remote web conference. The laptop PC 2a is a laptop computer, and can communicate with the conference system server 1 via the network NW1. When the person A participates in the remote web conference in an office (for example, at his/her seat), the laptop PC 2a is connected to a headset (not shown) or an earphone with a microphone (not shown) worn by the person A so that an audio data signal can be input and output. The laptop PC 2a generates the data for the person A in the audio output setting table TBL1 described above in accordance with an input operation of the person A, and updates a part or all of the contents thereof by changing, deleting, or the like. A data signal of the data for the person A in the audio output setting table TBL1 obtained by the generation or updating is transmitted from the laptop PC 2a to the conference system server 1 and aggregated in the conference system server 1. A hardware configuration example of the laptop PC 2a will be described later in detail with reference to Fig. 3.

The tablet terminal 2b is an example of the user terminal, and is a communication device used by a person B (for example, an employee) participating in the remote web conference. The tablet terminal 2b can communicate with the conference system server 1 via the network NW1. When the person B participates in the remote web conference in an office (for example, at his/her seat), the tablet terminal 2b is connected to a headset (not shown) or an earphone with a microphone (not shown) worn by the person B so that an audio data signal can be input and output. The tablet terminal 2b generates the data for the person B in the audio output setting table TBL1 described above in accordance with an input operation of the person B, and updates a part or all of the contents thereof by changing, deleting, or the like. A data signal of the data for the person B in the audio output setting table TBL1 obtained by the generation or updating is transmitted from the tablet terminal 2b to the conference system server 1 and aggregated in the conference system server 1. A hardware configuration example of the tablet terminal 2b will be described later in detail with reference to Fig. 3.

The laptop PC 2c is an example of the user terminal, and is a communication device used by a person C (for example, an employee) participating in the remote web conference. The laptop PC 2c is a laptop computer, and can communicate with the conference system server 1 via the network NW1. When the person C participates in the remote web conference in an office (for example, at his/her seat), the laptop PC 2c is connected to a headset (not shown) or an earphone with a microphone (not shown) worn by the person C so that an audio data signal can be input and output. The laptop PC 2c generates the data for the person C in the audio output setting table TBL1 described above in accordance with an input operation of the person C, and updates a part or all of the contents thereof by changing, deleting, or the like. A data signal of the data for the person C in the audio output setting table TBL1 obtained by the generation or updating is transmitted from the laptop PC 2c to the conference system server 1 and aggregated in the conference system server 1. A hardware configuration example of the laptop PC 2c will be described later in detail with reference to Fig. 3.

The laptop PC 2d is an example of the user terminal, and is a communication device used by a person D (for example, an employee) participating in the remote web conference. The laptop PC 2d is a laptop computer, and can communicate with the conference system server 1 via the network NW1. When the person D participates in the remote web conference in an office (for example, at his/her seat), the laptop PC 2d is connected to a headset (not shown) or an earphone with a microphone (not shown) worn by the person D so that an audio data signal can be input and output. The laptop PC 2d generates the data for the person D in the audio output setting table TBL1 described above in accordance with an input operation of the person D, and updates a part or all of the contents thereof by changing, deleting, or the like. A data signal of the data for the person D in the audio output setting table TBL1 obtained by the generation or updating is transmitted from the laptop PC 2d to the conference system server 1 and aggregated in the conference system server 1. A hardware configuration example of the laptop PC 2d will be described later in detail with reference to Fig. 3.

The laptop PC 2e is an example of the user terminal, and is a communication device used by a person E (for example, an employee) participating in the remote web conference. The laptop PC 2e is a laptop computer, and can communicate with the conference system server 1 via the network NW1. When the person E participates in the remote web conference in an office (for example, at his/her seat), the laptop PC 2e is connected to a headset (not shown) or an earphone with a microphone (not shown) worn by the person E so that an audio data signal can be input and output. The laptop PC 2e generates the data for the person E in the audio output setting table TBL1 described above in accordance with an input operation of the person E, and updates a part or all of the contents thereof by changing, deleting, or the like. A data signal of the data for the person E in the audio output setting table TBL1 obtained by the generation or updating is transmitted from the laptop PC 2e to the conference system server 1 and aggregated in the conference system server 1. A hardware configuration example of the laptop PC 2e will be described later in detail with reference to Fig. 3.

In the present embodiment, the seats of three persons A, C, and E who participate in the remote web conference are arranged near each other. Therefore, for example, when the person A wears a headset or the like and speaks, a direct voice of a speech voice of the person A propagates without passing through the headset or the like and reaches the ears of the persons C and E. Similarly, for example, when the person C wears a headset or the like and speaks, a direct voice of a speech voice of the person C propagates without passing through the headset or the like and reaches the ears of the persons A and E. Similarly, for example, when the person E wears a headset or the like and speaks, a direct voice of a speech voice of the person E propagates without passing through the headset or the like and reaches the ears of the persons A and C.

Next, the hardware configuration example of the conference system server will be described with reference to Fig. 2. Fig. 2 is a block diagram showing the hardware configuration example of the conference system server 1. The conference system server 1 includes a control unit 11, a read only memory (ROM) 12, a random access memory (RAM) 13, a wired LAN communication I/F unit 14, and a display/operation unit 15.

The control unit 11 is implemented with a processor such as a central processing unit (CPU), a micro processing unit (MPU), a digital signal processor (DSP), or a field programmable gate array (FPGA). The control unit 11 functions as a controller that controls the overall operation of the conference system server 1, and performs control processing for supervising operations of the units of the conference system server 1, input and output processing of data between the units of the conference system server 1, arithmetic processing of data, and storage processing of data. The control unit 11 operates according to a program and data stored in the ROM 12, uses the RAM 13 at the time of operation, temporarily stores data or information created or acquired by the control unit 11 in the RAM 13, and sends the data or information to the wired LAN communication I/F unit 14 or the display/operation unit 15. The control unit 11 functionally includes a conference system control unit 11A, and performs various processes and controls by the cooperation between the conference system control unit 1 1A and the ROM 12 and RAM 13.

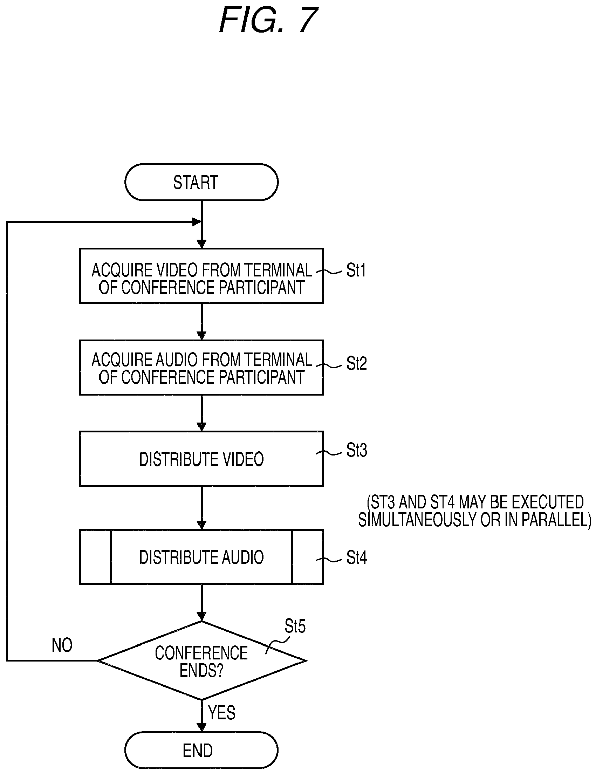

The conference system control unit 11A is an example of the processor, is an application used in the remote web conference between the conference system server 1 and the communication devices (the laptop PCs 2a, 2c, 2d, and 2e, and the tablet terminal 2b), and controls execution of communication (transmission and reception) of video and audio data signals during the remote web conference with the communication devices (the laptop PCs 2a, 2c, 2d, and 2e, and the tablet terminal 2b). The operation of the conference system control unit 11A will be described later in detail with reference to Figs. 7, 8, and 9.

The ROM 12 is an example of a memory, and stores a program that defines each processing (operation) of the control unit 11 and data when the program is executed.

The RAM 13 is an example of a memory, is a work memory used when each processing (operation) of the control unit 11 is executed, and temporarily stores data or information generated or acquired by the control unit 11. For example, the RAM 13 stores (holds) data in the generated or updated audio output setting table TBL1 (see Fig. 6) temporarily or during operation of the conference system server 1.

The wired LAN communication I/F unit 14 is an example of a communication unit, and is implemented with a communication circuit that inputs and outputs the video and audio data signals to and from the network NW1 via a LAN cable (not shown). The wired LAN communication I/F unit 14 sends the video and audio data signals to the network NW1, or inputs the video and audio data signals sent from the communication devices (the laptop PCs 2a, 2c, 2d, and 2e, and the tablet terminal 2b) via the network NW1 and sends the video and audio data signals to the control unit 11. In the present embodiment, the conference system server 1 and the network NW1 are connected by wire, but may be connected wirelessly. In the case of the wireless connection, a wireless LAN communication I/F unit (not shown) for wireless communication connection and wireless communication with the network NW1 is provided instead of the wired LAN communication I/F unit 14.

The display/operation unit 15 is implemented with, for example, a touch panel that accepts an input operation of an operator or an administrator of the conference system 100 and displays data generated by the control unit 11, and forms a user interface. In the conference system server 1, the configuration of the display/operation unit 15 may be omitted.

Next, a hardware configuration example of the laptop PC or the tablet terminal will be described with reference to Fig. 3. Fig. 3 is a block diagram showing a hardware configuration example of the laptop PCs 2a, 2c, 2d, and 2e/the tablet terminal 2b. Although the laptop PCs 2a, 2c, 2d, and 2e and the tablet terminal 2b have the same hardware configuration, the laptop PCs 2a, 2c, 2d, and 2e or the tablet terminal 2b may further have a hardware configuration not illustrated in Fig. 3. In the description of Fig. 3, the laptop PC 2a is exemplified and a configuration of the laptop PC 2a is described. However, the laptop PC 2a may be replaced with any of the laptop PCs 2c, 2d, and 2e and the tablet terminal 2b.

The laptop PC 2a includes a control unit 51, a display/operation unit 52, a ROM 53, a RAM 54, an audio input and output control unit 55, a microphone MC1, a speaker SPK1, a short-range wireless control unit 56, an earphone communication I/F unit 57, a wireless LAN communication I/F unit 58, a video and audio bus 59, a public line protocol control unit 60, a public line communication I/F unit 61, a universal serial bus (USB) communication I/F unit 62, a camera unit CAM1, and a battery BT2. In Fig. 3, the interface is abbreviated as "IF".

The control unit 51 is implemented with, for example, a processor such as a CPU, a DSP, or an FPGA. The control unit 51 functions as a controller that controls the overall operation of the laptop PC 2a, and performs control processing for supervising operations of the units of the laptop PC 2a, input and output processing of data between the units of the laptop PC 2a, arithmetic processing of data, and storage processing of data. The control unit 51 operates according to a program and data stored in the ROM 53, uses the RAM 54 at the time of operation, temporarily stores data or information created or acquired by the control unit 51 in the RAM 54, and sends the data or information to the audio input and output control unit 55, the short-range wireless control unit 56 via the video and audio bus 59, the public line protocol control unit 60, or the USB communication I/F unit 62. The control unit 51 functionally includes a conference application processing unit 51A, and performs various processes and controls by the cooperation between the conference application processing unit 51A and the ROM 53 and RAM 54.

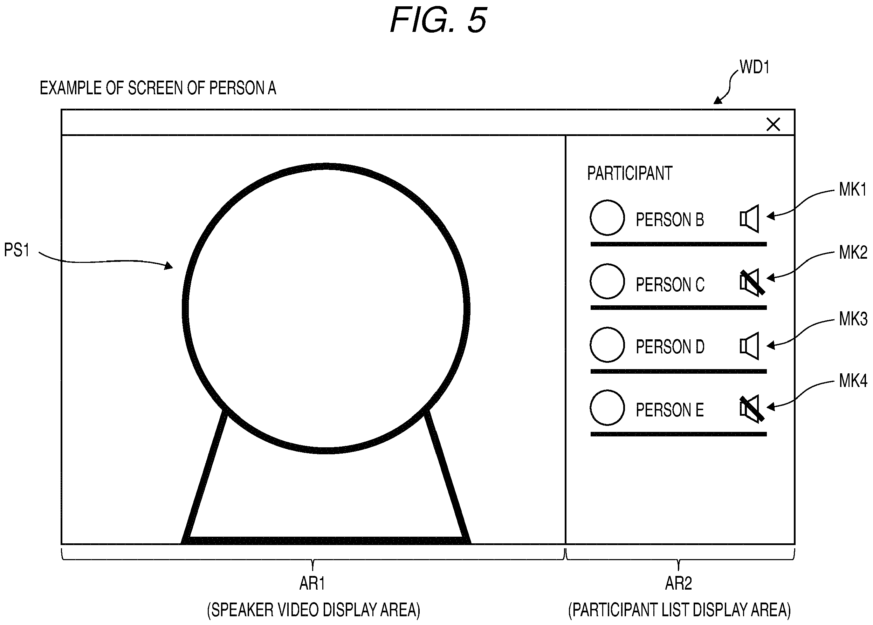

The conference application processing unit 51A is an application used in the remote web conference between the conference system server 1 and the communication devices (the laptop PCs 2a, 2c, 2d, and 2e, and the tablet terminal 2b), and controls execution of communication (transmission and reception) of video and audio data signals during the remote web conference with the conference system server 1. The operation of the conference application processing unit 51A will be described later in detail with reference to Figs. 5, 6 and 10.

The display/operation unit 52 is implemented with a touch panel that accepts an input operation of a user (for example, a participant (the person A) using the laptop PC 2a) and displays data generated by the control unit 51, and forms a user interface. The display/operation unit 52 displays, for example, a setting screen WD1 (see Fig. 5) for generating the data for the person A (record a) in the audio output setting table TBL1 (see Fig. 6), and detects various input operations (to be described later) on the setting screen WD1.

The ROM 53 stores a program that defines each processing (operation) of the control unit 51 and data when the program is executed.

The RAM 54 is a work memory used when each processing (operation) of the control unit 51 is executed, and temporarily stores data generated or acquired by the control unit 51. For example, the RAM 54 stores (holds) the data for the person A in the generated or updated audio output setting table TBL1 (see Fig. 6) temporarily or during operation of the laptop PC 2a.

The audio input and output control unit 55 is connected to each of the microphone MC1 and the speaker SPK1 so that a data signal (for example, a data signal of a speech voice of the person A who is using the laptop PC 2a) can be input and output, and is implemented with a communication circuit capable of executing various processes (operations) related to the input and output of the data signal of the speech voice. The audio input and output control unit 55 may convert the data signal of the speech voice in a digital format sent from the control unit 51 via the video and audio bus 59 into an analog format and output the data signal from the speaker SPK1. In addition, the audio input and output control unit 55 inputs a data signal of sound or audio in an analog format collected by the microphone MC1, converts the data signal into a data signal in a digital format, and transmits the data signal to the control unit 51.

The microphone MC1 is configured with a microphone device capable of collecting a speech voice of a user (for example, the person A who is using the laptop PC 2a). The microphone MC1 generates an electric signal of the speech voice obtained by collecting sounds, and transmits the electric signal to the audio input and output control unit 55. In the present embodiment, during the remote web conference, the operation of the microphone MC1 may be turned off in response to an input operation of a user (for example, the person A who is using the laptop PC 2a) to the display/operation unit 52 or in response to connection of a headset (not shown) or an earphone with a microphone (not shown) to the laptop PC 2a.

The speaker SPK1 may output a sound or audio data signal sent from the audio input and output control unit 55 via the control unit 51 and the video and audio bus 59 based on an instruction from the control unit 51. In the present embodiment, during the remote web conference, the operation of the speaker SPK1 may be turned off in response to an input operation of a user (for example, the person A who is using the laptop PC 2a) to the display/operation unit 52 or in response to connection of a headset (not shown) or an earphone with a microphone (not shown) to the laptop PC 2a.

The short-range wireless control unit 56 is implemented with a circuit capable of executing control for wirelessly transmitting input video and audio data signals, and is connected to the earphone communication I/F unit 57 and the wireless LAN communication I/F unit 58 so as to input and output the video and audio data signals. The short-range wireless control unit 56 inputs video and audio data signals sent from at least one of the earphone communication I/F unit 57 and the wireless LAN communication I/F unit 58, and sends the video and audio data signals to the control unit 51 via the video and audio bus 59. The short-range wireless control unit 56 sends a sound or audio data signal input via the video and audio bus 59 to at least one of the earphone communication I/F unit 57 and the wireless LAN communication I/F unit 58.

The earphone communication I/F unit 57 includes an antenna AT1, and is implemented with a communication circuit that performs wireless communication (for example, Bluetooth (registered trademark)) with a headset (not shown) or an earphone with a microphone (not shown). The earphone communication I/F unit 57 receives a data signal such as an audio transmitted from a headset (not shown) or an earphone with a microphone (not shown) via the antenna AT 1, and transmits a data signal such as an audio sent from the short-range wireless control unit 56 to a headset (not shown) or an earphone with a microphone (not shown) via the antenna AT 1.

The wireless LAN communication I/F unit 58 includes an antenna AT2 and is implemented with a communication circuit connectable to the Internet via a wireless LAN router (not shown). The wireless LAN communication I/F unit 58 may perform wireless communication (for example, wireless LAN such as Wi-Fi (registered trademark)) with an external device (not shown) via the wireless LAN router (not shown) described above. The wireless LAN communication I/F unit 58 receives video and audio data signals transmitted from the external device (not shown) via the antenna AT2, and transmits video and audio data signals transmitted from the short-range wireless control unit 56 to the external device (not shown) via the antenna AT2.

The video and audio bus 59 is a data transmission path of video and audio data signals, and transmits video and audio data signals between the control unit 51 and the audio input and output control unit 55, between the control unit 51 and the short-range wireless control unit 56, between the control unit 51 and the public line protocol control unit 60, and between the audio input and output control unit 55 and the short-range wireless control unit 56.

The public line protocol control unit 60 is implemented with a circuit capable of executing control for wirelessly transmitting input video and audio data signals, and is connected to the public line communication I/F unit 61 so as to input and output the video and audio data signals. The public line protocol control unit 60 receives the video and audio data signals sent from the public line communication I/F unit 61, and sends the video and audio data signals to the control unit 51 via the video and audio bus 59 or directly. The public line protocol control unit 60 sends the video and audio data signals input via the video and audio bus 59 to the public line communication I/F unit 61.

The public line communication I/F unit 61 includes an antenna AT3, and is implemented with a communication circuit that performs wireless communication (for example, wireless communication conforming to 4G (fourth generation mobile communication scheme) such as long term evolution (LTE) or 5G (fifth generation mobile communication scheme)) with another external terminal (not shown). The public line communication I/F unit 61 receives video and audio data signals transmitted from another external terminal (not shown) described above via the antenna AT3, and transmits the video and audio data signals sent from the public line protocol control unit 60 to another external terminal (not shown) described above via the antenna AT3.

The USB communication I/F unit 62 is implemented with a communication circuit that inputs and outputs a data signal such as audio to and from an external device (for example, a headset (not shown) or an earphone with a microphone (not shown)) connectable via a USB cable (not shown). The USB communication I/F unit 62 sends a data signal such as audio to the external device (not shown) described above, and inputs the data signal such as audio sent from the external device (not shown) and sends the data signal to the control unit 51.

The camera unit CAM1 has a known camera function, and has, for example, an angle of view including a periphery of a face of a person (for example, the person A) who looks at a predetermined position (for example, a center position) of a touch panel of the display/operation unit 52, and images a subject within the angle of view. The camera unit CAM1 sends a data signal of a video obtained by imaging to the control unit 51.

The battery BT2 is configured with a secondary battery capable of storing electric power supplied from an external commercial power supply (not shown), and supplies necessary electric power to units constituting the laptop PC 2a.

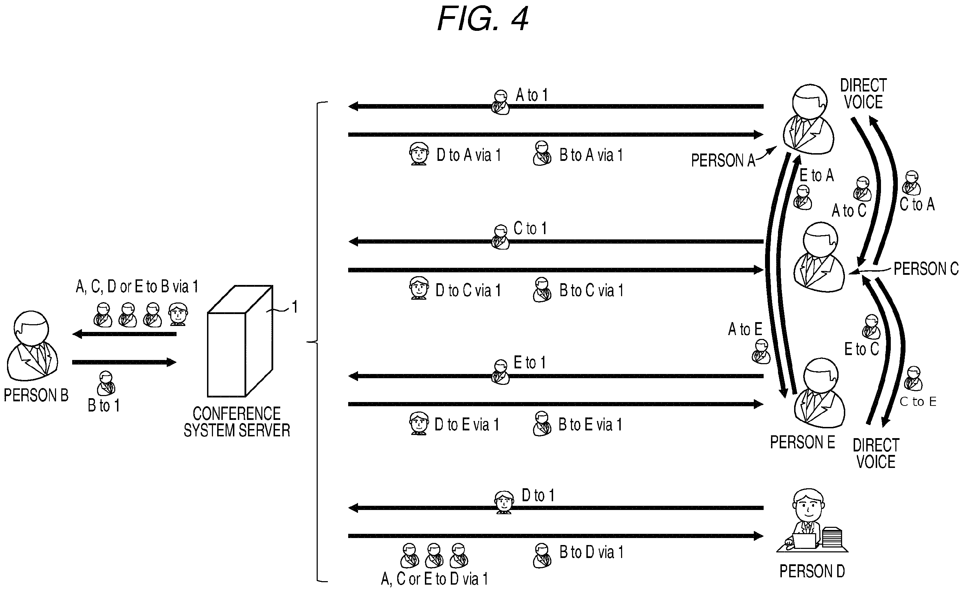

Next, an operation outline example of the conference system according to the present embodiment will be described with reference to Fig. 4. Fig. 4 schematically shows an operation outline example of the conference system 100. In the following description, in the remote web conference, all the participants wear their own headsets (not shown) or earphones with microphones (not shown) on the laptop PC or the tablet terminal.

As described above, in the remote web conference using the conference system 100, the seats of three persons A, C, and E who are participants are close to each other. For this reason, when the person A speaks, the direct voice of the speech voice of the person A propagates to the persons C and E. Similarly, when the person C speaks, the direct voice of the speech voice of the person C propagates to the persons A and E. When the person E speaks, the direct voice of the speech voice of the person E propagates to the persons A and C. Two persons B and D are located away from the seats of other participants. Specifically, the person B is working at home and participating in the remote web conference, and the person D is working in the office, but is participating in the remote web conference from his/her own seat or from a conference room.

When the conference system server 1 receives a data signal of a speech voice of the person B, the conference system server 1 distributes the data signal of the speech voice of the person B to each of the laptop PC 2a of the person A, the laptop PC 2c of the person C, the laptop PC 2d of the person D, and the laptop PC 2e of the person E based on the audio output setting table TBL1 described later.

Similarly, when the conference system server 1 receives a data signal of a speech voice of the person D, the conference system server 1 distributes the data signal of the speech voice of the person D to each of the laptop PC 2a of the person A, the tablet terminal 2b of the person B, the laptop PC 2c of the person C, and the laptop PC 2e of the person E based on the audio output setting table TBL1 described later.

On the other hand, when the conference system server 1 receives the data signal of the speech voice of the person A, the conference system server 1 distributes the data signal of the speech voice of the person A to only the tablet terminal 2b of the person B and the laptop PC 2d of the person D based on the audio output setting table TBL1 to be described later, and does not distribute the data signal to the laptop PC 2c of the person C and the laptop PC 2e of the person E but omits the distribution. This is because the persons C and E are located near the seat of the person A. That is, if the data signal of the speech voice of the person A is distributed to each of the laptop PC 2c of the person C and the laptop PC 2e of the person E, the persons C and E hear the direct voice of the speech voice of the person A and then hear the same speech voice distributed from the conference system server 1 with a delay. For this reason, the person C and the person E hear the speech voice of the person A twice with different timings, and thus the person C and the person E not only feel a sense of incongruity, but also may fail to hear the utterance of other participants. Accordingly, there is a concern that the remote web conference cannot be efficiently progressed.

Similarly, when the conference system server 1 receives the data signal of the speech voice of the person C, the conference system server 1 distributes the data signal of the speech voice of the person C to only the tablet terminal 2b of the person B and the laptop PC 2d of the person D based on the audio output setting table TBL1 to be described later, and does not distribute the data signal to the laptop PC 2a of the person A and the laptop PC 2e of the person E but omits the distribution. This is because the persons A and E are located near the seat of the person C. That is, if the data signal of the speech voice of the person C is distributed to each of the laptop PC 2a of the person A and the laptop PC 2e of the person E, the persons A and E hear the direct voice of the speech voice of the person C and then hear the same speech voice distributed from the conference system server 1 with a delay. For this reason, the person A and the person E hear the speech voice of the person C twice with different timings, and thus the person A and the person E not only feel a sense of incongruity, but also may fail to hear the utterance of other participants. Accordingly, there is a concern that the remote web conference cannot be efficiently progressed.

When the conference system server 1 receives the data signal of the speech voice of the person E, the conference system server 1 distributes the data signal of the speech voice of the person E to only the tablet terminal 2b of the person B and the laptop PC 2d of the person D based on the audio output setting table TBL1 to be described later, and does not distribute the data signal to the laptop PC 2a of the person A and the laptop PC 2c of the person C but omits the distribution. This is because the persons A and C are located near the seat of the person E. That is, if the data signal of the speech voice of the person E is distributed to each of the laptop PC 2a of the person A and the laptop PC 2c of the person C, the persons A and C hear the direct voice of the speech voice of the person E and then hear the same speech voice distributed from the conference system server 1 with a delay. For this reason, the person A and the person C hear the speech voice of the person E twice with different timings, and thus the person A and the person E not only feel a sense of incongruity, but also may fail to hear the utterance of other participants. Accordingly, there is a concern that the remote web conference cannot be efficiently progressed.

Next, the setting screen and the audio output setting table displayed during the remote web conference will be described with reference to Figs. 5 and 6. Fig. 5 shows an example of the setting screen WD1 displayed on a display/operation unit of the laptop PC/tablet terminal. Fig. 6 shows an example of the audio output setting table.

The setting screen WD1 shown in Fig. 5 is a screen that is called by a conference application (not shown) installed in both the conference system server 1 and the communication devices (the laptop PCs 2a, 2c, 2d, and 2e, and the tablet terminal 2b) during the remote web conference, for example, and is displayed on the display/operation unit 52. In Fig. 5, in order to make the description easy to understand, it is assumed that the setting screen WD1 is displayed on the display/operation unit 52 of the laptop PC 2a used by the person A, but may be displayed on the display/operation unit 52 of the laptop PC or the tablet terminal used by other participants. The setting screen WD1 includes a speaker video display area AR1 and a participant list display area AR2.

The speaker video display area AR1 displays a video PS1 of a person (for example, the person B) who is a participant other than the person A who is using the laptop PC 2a displaying the setting screen WD1 and who is speaking during the remote web conference. The video PS1 is displayed by distributing a data signal of a video imaged by the tablet terminal 2b used by the person B to the laptop PC 2a via the conference system server 1.

The participant list display area AR2 displays a list of identification information such as names of participants (that is, the person B, the person C, the person D, and the person E) other than the person A who is using the laptop PC 2a displaying the setting screen WD1. In addition, the participant list display area AR2 further displays, for each participant other than the person A, output icons MK1, MK2, MK3, and MK4 that define whether (that is, permission or prohibition) to output a data signal of a speech voice at the time of the participant speaking. In the example of Fig. 5, the output icon MK1 is provided for the person B, the output icon MK2 is provided for the person C, the output icon MK3 is provided for the person D, and the output icon MK4 is provided for the person E.

In a case where the person A wants to set so as not to output the data signal of the speech voice of each of the persons C and E who are located near the seat of the person A, the conference application processing unit 51A of the laptop PC 2a detects an input operation by the person A for designating output off for each of the output icons MK2 and MK4 via the display/operation unit 52. Then, the conference application processing unit 51A generates, as the data for the person A in the audio output setting table TBL1 (see Fig. 6), prohibition (off) of audio output of the person C, prohibition (off) of audio output of the person E, permission (on) of audio output of the person B, and permission (on) of audio output of the person D, and sends the generated data to the conference system server 1. Here, the generation of the data for the person A in the audio output setting table TBL1 (see Fig. 6) by the laptop PC 2a has been described based on the input operation of the person A, but the respective data in the audio output setting table TBL1 (see Fig. 6) are described in the same manner based on input operations of other participants. Since the same processing is performed, the description thereof will be omitted.

The audio output setting table TBL1 defines, for each participant (a user) in the remote web conference, permission and prohibition of output of data signals of speech voices of one or more other participants (in other words, distribution to a laptop PC or a tablet terminal used by the one or more other participants). Specifically, as shown in Fig. 6, the audio output setting table TBL1 includes the data (record) for the person A, the data (record) for the person B, the data (record) for the person C, the data (record) for the person D, and the data (record) for the person E.

The audio output setting table TBL1 is generated in advance and stored in the RAM 13 of the conference system server 1 before the remote web conference is started, but some data in the audio output setting table TBL1 may be updated such as addition, change, and deletion during the progress of the remote web conference after the remote web conference is started. Accordingly, the speech voice of the participant of the remote web conference is adaptively output according to the environment or the like around the seat of the participant, the participant can concentrate on the remote web conference without feeling a sense of incongruity, and it is possible to prevent the deterioration of work efficiency.

In the example of Fig. 6, a parameter indicating a participant (a conference participant) in the remote web conference is n (any value of 0, 1, 2, 3, and 4), and a parameter indicating a participant other than the participant himself/herself is x (any value of 0, 1, 2, 3, and 4).

In the data (record) for the person A, the data signal of the speech voice of the person A is not output from the laptop PC 2a used by the person A (himself/herself). Only the data signal of the speech voice of the person B distributed from the tablet terminal 2b of the person B and the data signal of the speech voice of the person D distributed from the laptop PC 2d of the person D are permitted to be output from the laptop PC 2a (see "ON" in Fig. 6 and Fig. 4). The data signal of the speech voice of the person C distributed from the laptop PC 2c of the person C and the data signal of the speech voice of the person E distributed from the laptop PC 2e of the person E located near the seat of the person A are prohibited from being output from the laptop PC 2a of the person A (see "OFF" in Fig. 6 and Fig. 4).

In the data (record) for the person B, the data signal of the speech voice of the person B is not output from the tablet terminal 2b used by the person B (himself/herself). The data signal of the speech voice of the person A distributed from the laptop PC 2a of the person A, the data signal of the speech voice of the person C distributed from the laptop PC 2c of the person C, the data signal of the speech voice of the person D distributed from the laptop PC 2d of the person D, and the data signal of the speech voice of the person E distributed from the laptop PC 2e of the person E are permitted to be output from the tablet terminal 2b of the person B (see "ON" in Fig. 6 and Fig. 4).

In the data (record) for the person C, the data signal of the speech voice of the person C is not output from the laptop PC 2c used by the person C (himself/herself). Only the data signal of the speech voice of the person B distributed from the tablet terminal 2b of the person B and the data signal of the speech voice of the person D distributed from the laptop PC 2d of the person D are permitted to be output from the laptop PC 2c (see "ON" in Fig. 6 and Fig. 4). The data signal of the speech voice of the person A distributed from the laptop PC 2a of the person A and the data signal of the speech voice of the person E distributed from the laptop PC 2e of the person E located near the seat of the person C are prohibited from being output from the laptop PC 2c of the person C (see "OFF" in Fig. 6 and Fig. 4).

In the data (record) for the person D, the data signal of the speech voice of the person D is not output from the laptop PC 2d used by the person D (himself/herself). The data signal of the speech voice of the person A distributed from the laptop PC 2a of the person A, the data signal of the speech voice of the person B distributed from the tablet terminal 2b of the person B, the data signal of the speech voice of the person C distributed from the laptop PC 2c of the person C, and the data signal of the speech voice of the person E distributed from the laptop PC 2e of the person E are permitted to be output from the laptop PC 2d of the person D (see "ON" in Fig. 6 and Fig. 4).

In the data (record) for the person E, the data signal of the speech voice of the person E is not output from the laptop PC 2e used by the person E (himself/herself). Only the data signal of the speech voice of the person B distributed from the tablet terminal 2b of the person B and the data signal of the speech voice of the person D distributed from the laptop PC 2d of the person D are permitted to be output from the laptop PC 2a (see "ON" in Fig. 6 and Fig. 4). The data signal of the speech voice of the person A distributed from the laptop PC 2a of the person A and the data signal of the speech voice of the person C distributed from the laptop PC 2c of the person C located near the seat of the person E are prohibited from being output from the laptop PC 2e of the person E (see "OFF" in Fig. 6 and Fig. 4).

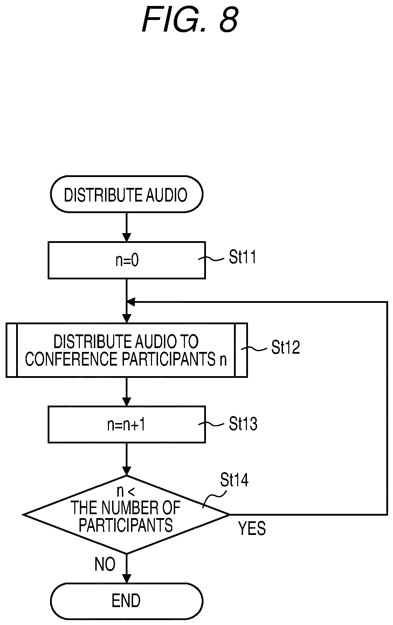

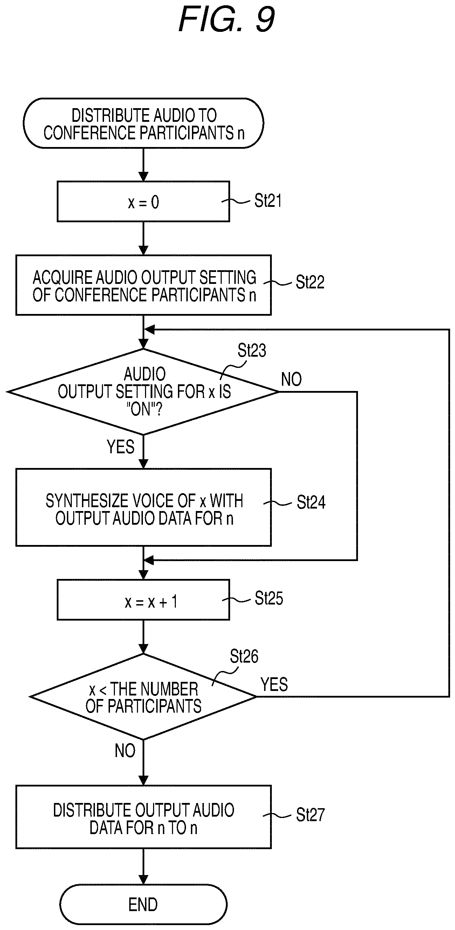

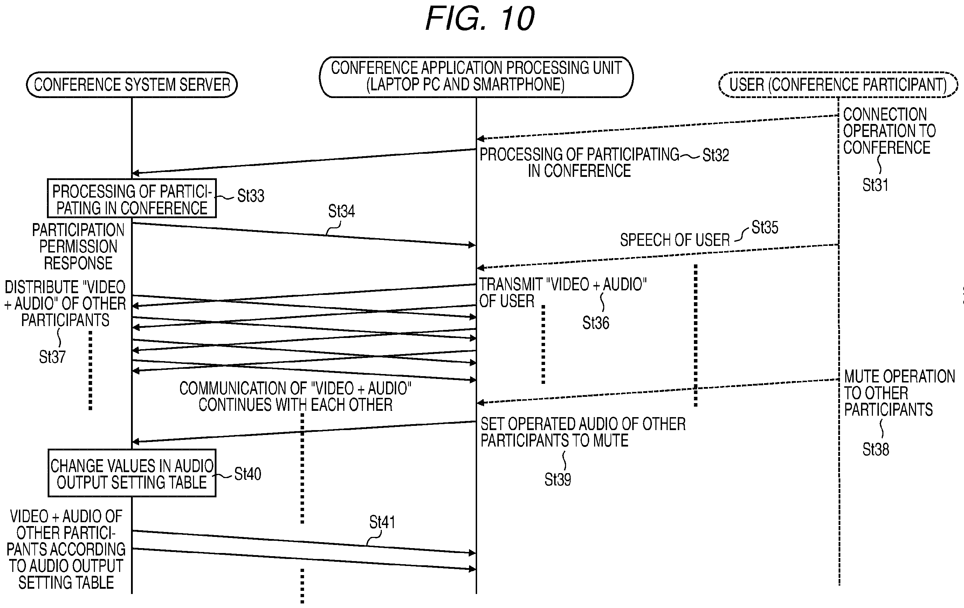

Next, an operation procedure of the conference system server and the conference system according to the present embodiment will be described with reference to Figs. 7 to 10. Fig. 7 is a flowchart showing an example of an overall operation procedure of the conference system server. Fig. 8 is a flowchart showing an example of a detailed operation procedure of step St4 of Fig. 7. Fig. 9 is a flowchart showing an example of a detailed operation procedure of step St12 of Fig. 8. Fig. 10 is a sequence diagram showing an example of an operation procedure between the conference system server and a conference application processing unit of the laptop PC/tablet terminal in time series.

The operations shown in Figs. 7 to 9 are mainly executed by the conference system control unit 11A of the conference system server 1. In the description of Fig. 10, it is assumed that an example of a participant (a user) of the remote web conference is the person A who uses the laptop PC 2a, and an example of a conference application processing unit is the conference application processing unit 51A of the laptop PC 2a. However, in the description of Fig. 10, an example of a participant (a user) of the remote web conference may be a person other than the person A. In this case, the conference application processing unit is the conference application processing unit 51A of a laptop PC or a tablet terminal used by the person.

### <Overall Operation Procedure>

In Fig. 7, the conference system control unit 11A acquires video data signals of participants participating in the remote web conference sent from the communication devices (the laptop PCs 2a, 2c, 2d, and 2e, and the tablet terminal 2b) used by the participants (step St1). The conference system control unit 11A acquires audio data signals of the participants participating in the remote web conference sent from the communication devices (the laptop PCs 2a, 2c, 2d, and 2e, and the tablet terminal 2b) used by the participants (step St2).

The conference system control unit 11A distributes the video data signals of the participants acquired in step St1 to the communication devices (the laptop PCs 2a, 2c, 2d, and 2e, and the tablet terminal 2b) used by the participants participating in the remote web conference (step St3). The conference system control unit 11A refers to the audio output setting table TBL1 from the RAM 13 and determines whether the audio data signals of the participants acquired in step St2 are distributed. The conference system control unit 11A distributes the audio data signals to a communication device permitted to be distributed based on a result of determining whether the audio data signals are distributed (step St4). Details of step St4 will be described later with reference to Fig. 8. The processing of steps St3 and St4 may be executed by the conference system control unit 11A in the order of time series shown in Fig. 7, or may be executed in parallel.

After step St4, if the remote web conference ends (YES in step St5), the processing of the conference system control unit 11A ends. On the other hand, if the remote web conference has not ended (NO in step St5), the processing of the conference system control unit 11A returns to step St1. That is, the conference system control unit 11A repeats the processing of steps St1 to St4 until the remote web conference is started and ended. The conference system control unit 11A may determine the end of the remote web conference by detecting a conference end operation from any of the communication devices (the laptop PCs 2a, 2c, 2d, and 2e, and the tablet terminal 2b). The method of detecting the end of the remote web conference by the conference system control unit 1 1A is not limited to the method described above.

### <Details of Step St4>

In Fig. 8, the conference system control unit 11A initializes and sets n as a parameter indicating the participants (conference participants) in the remote web conference (step St11). The conference system control unit 11A distributes the audio (for example, the speech voice) data signals acquired in step St2 to the participants indicated by n which is the parameter set in step St11 (step St12). Details of step St12 will be described later with reference to Fig. 9.

After step St12, the conference system control unit 11A increments the parameter n (step St13). If the conference system control unit 11A determines that the parameter n incremented in step St13 is less than the number of participants of the remote web conference (for example, five participants) (YES in step St14), the processing of the conference system control unit 11A returns to step St12. On the other hand, if the conference system control unit 11A determines that the parameter n incremented in step St13 is equal to or greater than the number of participants of the remote web conference (for example, five participants) (NO in step St14), the processing of step St4 shown in Fig. 8 ends.

### <Details of Step St12>

In Fig. 9, the conference system control unit 11A initializes and sets x as a parameter indicating participants other than a participant himself/herself of the remote web conference (step St21). The conference system control unit 11A refers to the audio output setting table TBL1 from the RAM 13, and acquires data defined in the audio output setting table TBL1 (step St22). Based on the data acquired in step St22, the conference system control unit 11A determines whether the setting of the audio output to a participant (see, for example, the person A when x = 0, the person B when x = 1, the person C when x = 2, the person D when x = 3, and the person E when x = 4 in Fig. 6) corresponding to the parameter x set in step St21 is ON (permitted) (step St23).

If it is determined that the setting of the audio output to the participant corresponding to the parameter x set in step St21 is ON (permitted) (YES in step St23), the conference system control unit 11A synthesizes a data signal of a speech voice of the participant corresponding to x with a data signal of a speech voice for distribution to a participant corresponding to the current n (an output audio data for n) (step St24). On the other hand, if it is determined that the setting of the audio output to the participant corresponding to the parameter x set in step St21 is not ON (permitted) (NO in step St23), or after step St24, the conference system control unit 11A performs the processing of step St25. That is, the conference system control unit 11A increments the parameter x set in step St21 (step St25).

If the conference system control unit 11A determines that the parameter x incremented in step St25 is less than the number of participants of the remote web conference (for example, five participants) (YES in step St26), the processing of the conference system control unit 11A returns to step St23. On the other hand, if the conference system control unit 11A determines that the parameter x incremented in step St25 is equal to or greater than the number of participants of the remote web conference (for example, five participants) (NO in step St26), the conference system control unit 11A distributes the data signal of the speech voice synthesized in step St24 to a communication device corresponding to the current n via the wired LAN communication I/F 14 (step St27). Accordingly, the processing of step St12 shown in Fig. 9 ends.

In Fig. 10, the user (for example, the person A) performs a connection operation to the remote web conference on the display/operation unit 52 of the laptop PC 2a (step St31). Based on the connection operation in step St31, the conference application processing unit 51A of the laptop PC 2a launches a remote web conference, starts the processing of participating in the remote web conference of the person A, and requests the conference system server 1 (step St32). The conference system control unit 11A of the conference system server 1 executes participation processing for permitting the person A to participate in the remote web conference in accordance with the request in step St32 (step St33). The conference system control unit 11A generates a participation permission response indicating that the person A is permitted to participate in the remote web conference in step St33 and transmits the participation permission response to the laptop PC 2a (step St34).

Here, it is assumed that there is a speech related to proceedings of the remote web conference from the person A during the remote web conference, and the speech is periodically made (step St35).

Every time there is a speech of the person A in step St35, the conference application processing unit 51A of the laptop PC 2a sends video and audio data signals at the time of the speech to the conference system server 1 (step St36). On the other hand, each time there is a speech related to the proceedings of the remote web conference from a participant other than the person A during the remote web conference, the conference system server 1 sends video and audio data signals at the time of the speech to the laptop PC 2a of the person A (step St37). The transmission of the data signals in step St36 and the transmission of the data signals in step St37 continues with each other until the operation in step St38 is performed.

Here, it is assumed that the person A performs an operation to prohibit (in other words, mute) the output of the data signal of the speech voice of the specified other participants (for example, the persons C and E who are located near the seat of the person A) during the remote web conference (step St38).

The conference application processing unit 51A of the laptop PC 2a sends, to the conference system server 1, the data (record) for the person A for changing the audio output of the persons C and E to be prohibited (OFF) based on the detection of the mute operation to other participants (for example, the persons C and E) specified in step St38 (step St39). Based on the reception of the data (record) for the person A sent in step St39, the conference system server 1 sets (updates) the audio output of the person C and the person E in the data(record) for the person A of the audio output setting table TBL1 stored in the RAM 13 to be prohibited (OFF) (step St40). Based on the audio output setting table TBL1 updated in step St40, the conference system server 1 sends the data signals of the speech voices of the person B and the person D to the laptop PC 2a (the person A), but does not send the data signals of the speech voices of the person C and the person E and omits the data signals (step St41).

As described above, in the conference system 100 according to the present embodiment, the server (the conference system server 1) and a plurality of user terminals (the laptop PCs 2a, 2c, 2d, 2e, and the tablet terminal 2b) are communicably connected. The server has a function of setting permission and prohibition of output of speech voice signals of one or more other users for each user who is a user of each of the user terminals (for example, a function of generating the audio output setting table TBL1). When a specific user of a plurality of users participating in the conference (for example, the person A among persons A, B, C, D, and E who are five participants) speaks, the server transmits a speech voice signal of the specific user to a user terminal (for example, the tablet terminal 2b or the laptop PC 2d) of a permitted user (for example, the person B or the person D) who is permitted to output the speech voice signal of the specific user with respect to the specific user, based on the above setting (for example, the audio output setting table TBL1). Further, the server omits transmission of the speech voice signal of the specific user to a user terminal of a prohibited user (for example, the person C or the person E) who is prohibited from outputting the speech voice signal of the specific user with respect to the specific user. Accordingly, the conference system 100 or the conference system server 1 can prevent an omission of listeners (for example, other participants B, C, D, and E if the speaker is the person A) in listening to speech content in the remote web conference or the like in which the participants working in the office (for example, the person A, the person C, the person D, and the person E) and the participants working at home (for example, the person B) are mixed, and can support smooth progress of the remote web conference or the like.

In addition, the server (the conference system server 1) includes a table that defines permission and prohibition of output of speech voice signals of one or more other users for each user (the audio output setting table TBL1). When there are a plurality of permitted users (for example, the person B and the person D) based on the table (the audio output setting table TBL1), the server (the conference system server 1) transmits a speech voice signal of a specific user (for example, the person A) for each permitted user. Accordingly, the conference system 100 or the conference system server 1 can accurately transmit the data signal of the speech voice of the person A to each communication device (for example, the tablet terminal 2b or the laptop PC 2d) used by the permitted user whose audio output is permitted corresponding to the specific user using the audio output setting table TBL1.

In addition, the user terminal (for example, the laptop PC 2a used by the person A) displays the setting screen WD1 (see Fig. 5) for setting permission and prohibition of output of speech voice signals of one or more other users for each user (that is, a participant of the remote web conference), and switches one of the permission and prohibition of the output to the other according to a user operation on the setting screen WD1. Accordingly, the user can easily set whether to output the speech voice at the time of the speech of the user himself/herself with reference to a positional relationship with the participants other than the user himself/herself during the remote web conference.

The user terminal (for example, the laptop PC 2a used by the person A) performs display processing of the setting screen WD1 and accepting of a user operation on the setting screen WD1 during the progress of the remote web conference. Accordingly, in a case where there is an environment change such as other participants moving closer to the user or moving away from the user during the remote web conference, the user can easily set whether to output the speech voice at the time of the speech of the user to adaptively respond to the environment change.

When the permission of the output is switched to the prohibition in accordance with the user operation, the server (the conference system server 1) stops the transmission of the speech voice signal of the specific user to a user terminal to be prohibited. Accordingly, the conference system 100 or the conference system server 1 prohibits the audio output by the user operation in response to the switching from a state in which the output of the speech voice is permitted to a state in which the output of the speech voice is prohibited by the user operation. Therefore, by allowing the other participants who are prohibited to hear only the direct voice of the speaker, it is possible to prevent the double hearing of the utterance of the same user.

In addition, when the prohibition of the output is switched to the permission in accordance with the user operation, the server (the conference system server 1) starts transmission of the speech voice signal of the specific user to a user terminal to be permitted. Accordingly, the conference system 100 or the conference system server 1 permits the audio output by the user operation in response to the switching from the state in which the output of the speech voice is prohibited to the state in which the output of the speech voice is permitted by the user operation. Therefore, by allowing the other participants who are permitted to hear only a data signal of a speech signal distributed from the conference system server 1, which is not the direct voice of the speaker, it is possible to prevent the double hearing of the utterance of the same user.

The user terminal according to the present embodiment is any one of the plurality of user terminals (the laptop PCs 2a, 2c, 2d, and 2e, and the tablet terminal 2b) communicably connected to the server (the conference system server 1). The user terminal includes an operation unit (the display/operation unit 52) that accepts an input operation of a user himself/herself, a display unit (the display/operation unit 52) that displays a setting screen WD1 for generating information defining permission and prohibition of output of speech voice signals of one or more other users for each user who is a user of each of the user terminals (for example, the audio output setting table TBL1), and a processor (the conference application processing unit 51A) that performs a setting change of switching one of permission and prohibition of output of the speech voice signal of the user to the other based on an input operation on the setting screen WD1. Accordingly, in a remote web conference that can be performed with other participants via the conference system server 1, the user can easily set whether to output the speech voice at the time of the speech of the user himself/herself with reference to a positional relationship with the participants other than the user himself/herself during the remote web conference.

Although various embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the various embodiments described above may be combined freely in a range without deviating from the spirit of the disclosure.

### INDUSTRIAL APPLICABILITY

The present disclosure is useful as a conference system, a server, an audio output method, and a user terminal for preventing an omission in listening to speech content of a listener and supporting smooth progress of a conference or the like in which a commuting participant and a telecommuting participant are mixed.

## Claims

1. A conference system in which a server and a plurality of user terminals are communicably connected, wherein
the server has a function of setting permission and prohibition of output of speech voice signals of one or more other users for each user who is a user of each of the user terminals, and
when a specific user among a plurality of users participating in a conference speaks, the server, based on the setting, transmits the speech voice signals to user terminals of permitted users who are permitted to output the speech voice signals with respect to the specific user, and omits transmission of the speech voice signals of user terminals of prohibited users who are prohibited from outputting the speech voice signals with respect to the specific user.

2. The conference system according to claim 1, wherein
the server has a table that defines the permission and prohibition of the output of the speech voice signals of the one or more other users for each user, and
a speech voice signal of the specific user is transmitted, by the server, for each permitted user in a case where there are a plurality of the permitted users based on the table.

3. The conference system according to claim 1, wherein
the user terminal displays, for each user, a setting screen for setting the permission and prohibition of the output of the speech voice signals of the one or more other users, and switches one of the permission and prohibition of the output to the other according to a user operation on the setting screen.

4. The conference system according to claim 3, wherein
the user terminal performs display processing of the setting screen and accepting of the user operation on the setting screen during progress of the conference.

5. The conference system according to claim 3, wherein
when permission of the output is switched to prohibition in accordance with the user operation, the server stops transmission of a speech voice signal of the specific user to a user terminal to be prohibited.

6. The conference system according to claim 3, wherein
when prohibition of the output is switched to permission in accordance with the user operation, the server starts transmission of a speech voice signal of the specific user to a user terminal to be permitted.

7. A server communicably connected to a plurality of user terminals, the server comprising:
a memory configured to store information defining permission and prohibition of output of speech voice signals of one or more other users for each user who is a user of each of the user terminals;
a processor configured to, when a specific user among the plurality of users participating in a conference speaks, determine user terminals of permitted users who are permitted to output the speech voice signals with respect to the specific user, and determine to omit transmission of the speech voice signals to user terminals of prohibited users who are prohibited from outputting the speech voice signals with respect to the specific user, based on the information; and
a communication unit configured to transmit the speech voice signals to the user terminals of the permitted users.

8. An audio output method in a conference system in which a server and a plurality of user terminals are communicably connected, the audio output method comprising:
storing information defining permission and prohibition of output of speech voice signals of one or more other users for each user who is a user of each of the user terminals, and
when a specific user among a plurality of users participating in a conference speaks, transmitting the speech voice signals to user terminals of permitted users who are permitted to output the speech voice signals with respect to the specific user, and omitting transmission of the speech voice signals of user terminals of prohibited users who are prohibited from outputting the speech voice signals with respect to the specific user, based on the information.

9. A user terminal among a plurality of user terminals communicably connected to a server, the user terminal comprising:
an operation unit configured to accept an input operation;
a display unit configured to display a setting screen for generating information defining permission and prohibition of output of speech voice signals of one or more other users for each user who is a user of each of the user terminals; and
a processor configured to perform a setting change to switch one of the permission and prohibition of the output of the speech voice signals of the users to the other based on the input operation on the setting screen.
